# EUROPÄISCHE PATENTSCHRIFT

(11) **EP 2 917 631 B1**
(45) Veröffentlichungstag und Bekanntmachung des Hinweises auf die Patenterteilung: **21.06.2017**
(21) Anmeldenummer: 13788981.2
(22) Anmeldetag: 07.11.2013
(51) Int. Cl.: G01F 1/00, F28F 17/00, F28B 9/08, G01N 29/032, G01N 29/36, F28B 11/00, G01P 5/24, G01F 1/28, F16T 1/48

(54) **UEBERWACHUNG EINES KONDENSATABLEITERS**
MONITORING OF A CONDENSATE DRAIN
SURVEILLANCE D'UN PURGEUR DE CONDENSAT

(30) Priorität: 09.11.2012 DE 102012220505
(43) Veröffentlichungstag der Anmeldung: 16.09.2015
(73) Patentinhaber: Gestra AG, 28215 Bremen (DE)
(72) Erfinder: JANZEN, Sergej, 28215 Bremen (DE); SCHRÖTER, Holger, 28832 Achim (DE); KLATTENHOFF, Jürgen, 27749 Delmenhorst (DE)
(74) Vertreter: Eisenführ Speiser
(86) Internationale Anmeldenummer: PCT/EP2013/073304
(87) Internationale Veröffentlichungsnummer: WO 2014/072430

(56) Entgegenhaltungen:
- DE-A1- 4 303 798
- JP-A- H01 182 699
- JP-A- H01 210 700
- JP-A- H10 252 987

## Beschreibung

Die Erfindung betrifft ein Verfahren zur Überwachung eines Kondensatableiters, sowie einen Strömungssensor zur Erfassung von Strömungseigenschaften in einem ein Medium führendes Rohr und/oder einer Armatur, insbesondere Kondensatableiter, sowie eine Überwachungseinrichtung zum Überwachen wenigstens eines Kondensatableiters.

Kondensatableiter werden üblicherweise in Anlagen der chemischen, pharmazeutischen und energietechnischen Industrie eingesetzt, um ein sich in Dampfleitungen oder Behältern oder Umformprozessen bildendes Kondensat aus der Anlage abzuleiten. Dabei muss das Ableiten des Kondensats zu einem bestimmten Zeitpunkt erfolgen, um einen sogenannten Wasserschlag zu verhindern und um für einen effektiven Energieeinsatz zu sorgen. Ein solcher Wasserschlag tritt auf, wenn Dampf in eine eine niedrigere Temperatur aufweisende Flüssigkeit eingebracht wird oder in einer solchen Flüssigkeit entsteht. Zudem sollen die Kondensatableiter für den Fall, dass kein Kondensat vorhanden ist, das Ausströmen von Dampf verhindern.

In solchen Anlagen können beispielsweise aufgrund von Auswaschungen durch Magnetitbildung Verschleißerscheinungen, Verschmutzungen und/oder Ablagerungen auftreten. Dadurch kann es zu Leckagen oder Blockaden in den Anlagen verwendeten Kondensatableitern kommen. Von außen, also von außerhalb der Anlage bzw. der Rohre und/oder des Kondensatableiters der Anlage ist dabei nicht zu erkennen, ob der Kondensatableiter arbeitet oder nicht. In einem Verfahren zur Überwachung von Kondensatableitern soll die Funktionsfähigkeit der eingesetzten Kondensatableiter kontrolliert werden. Dabei muss geklärt werden, ob der Kondensatableiter fehlerfrei funktioniert und ob es bei einer fehlerbehafteten Funktion zu einer Leckage oder zu einer Blockade kommt. Dies ist notwendig, da beispielsweise blockierende Kondensatableiter zu erheblichen Reduzierungen der Leistung der Anlage führen können und undichte Kondensatableiter Dampfverluste zur Folge haben, die wiederum einen erheblichen wirtschaftlichen Verlust darstellen. Weiterhin ist mit einem Druckanstieg in Kondensatnetzen, also in einem System mit mehreren Kondensatableitern, zu rechnen. Dadurch bedingte Schwierigkeiten beim Ableiten können dann an mehreren Kondensatableitern in der Anlage auftreten. Zudem kann zusätzlich ein Kondensatstau entstehen, welcher Wasserschläge verursachen kann und zudem zu erheblichen Schäden im Dampf-Kondensatsystem führen kann. Üblicherweise ist in Anlagen ohne regelmäßige Prüfung bzw. Wartung mit einem Anteil an defekten Kondensatableitern in einer Größenordnung von 15 bis 25% zu rechnen. Durch regelmäßige durchzuführende Prüfungen lässt sich diese Ausfallrate deutlich verringern.

Zur Überwachung eines Kondensatableiters sind bereits mehrere Verfahren bekannt. Die Kondensatableiter lassen sich beispielsweise mittels Schaugläsern, durch Niveaumessung und mittels Schallmessung überprüfen. Nachteilig bei den genannten Verfahren ist, dass die Funktionsfähigkeit des Kondensatableiters nur abgeschätzt werden kann. Ein Verfahren zur Überwachung eines Kondensatableiters ist zum Beispiel aus dem Dokument JP H10 252987 A bekannt. Die auf einer Schallmessung basierenden Verfahren beruhen auf der Erfassung des Körperschalls, der von den Gehäuseoberflächen der Kondensatableiter abgestrahlt wird. Um die Arbeitsweise des Kondensatableiters beurteilen zu können, wird die erfasste Intensität des Körperschalls auf einem Anzeigegerät dargestellt bzw. mit vorher aufgenommenen Referenzdaten verglichen.

Dabei ist üblicherweise eine manuelle Prüfung jedes einzelnen Kondensatableiters erforderlich, was bei größeren Anlagen mit viel Aufwand verbunden ist. Das führt unter Umständen zu relativ großen Prüfintervallen, so dass Fehler im Kondensatableitersystem nicht sofort erkannt und beseitigt werden können.

Zur Erfassung von Körperschall ist üblicherweise eine mechanische Kontaktierung mit dem untersuchten Kondensatableiter erforderlich. Konstruktionsbedingt hängen die Messergebnisse relativ stark mit der Anpresskraft und dem Anpresswinkel des Messaufnehmers zusammen, so dass jede Veränderung einer dieser Parameter zu einem ungenauen Messergebnis führen kann. Die Kontaktstelle muss außerdem möglichst genau definiert sein.

Durch eine Auswertung ausschließlich der Schallintensität im Ultraschallbereich lässt sich nicht genau feststellen, ob der Kondensatableiter gerade ableitet oder aufgrund einer Beschädigung einen Dampfdurchschlag aufweist. Eine eindeutige Bestimmung des Arbeitszustandes ist in diesem Fall nicht gegeben.

Aufgabe der vorliegenden Erfindung ist es somit, die beschriebenen Nachteile zu beseitigen, zumindest zu verringern. Insbesondere soll ein Verfahren zur Überwachung eines Kondensatableiters bzw. entsprechende Vorrichtungen hierfür bereitgestellt werden, das bzw. die eine sichere und präzise Bestimmung unterschiedlicher Eigenschaften des Mediums bzw. der Arbeitsweise des Kondensatableiters ermöglichen.

Erfindungsgemäß wird somit ein Verfahren zur Überwachung eines Kondensatableiters gemäß Anspruch 1 vorgeschlagen. Das Verfahren umfasst die Schritte:
a) Vorsehen eines Strömungssensors zur Erfassung von Strömungseigenschaften in einem ein Medium führendes Rohr und/oder Armatur, wobei das Medium als mehrphasige Strömung ausgebildet ist,
b) Detektieren eines Schwingverhaltens an einer an einem Schwingkörper des Strömungssensors vorgesehenen Messstelle mittels des Schwingungswandlers,
c) Elektronisches Auswerten des Schwingverhaltens eines Schwingkörpers.

Dabei werden an der Messstelle Schwingungen eines ersten Bereiches des Schwingkörpers, der zumindest teilweise in einer Strömung des Mediums vorgesehen ist, und eines außerhalb der Strömung vorgesehenen zweiten Bereiches des Schwingkörpers aufgenommen. Die Schwingungen können am zweiten Bereich des Schwingkörpers z.B. mittels eines Piezo-Elementes oder Laservibrometers oder Mikrophones erfasst werden.

Unter einem Kondensatableiter werden im Folgenden auch ein Kondensomat und/oder eine Regelarmatur verstanden, welche ein sich in Dampfleitungen oder Behältern oder Umformprozessen bildendes Kondensat ableiten. Um einen solchen Kondensatableiter zu Überwachen, also die Funktionsfähigkeit des Kondensatableiters zu überprüfen, wird ein Strömungssensor zur Erfassung von Strömungseigenschaften in einem ein Medium führendes Rohr und/oder Armatur vorgesehen. Das Medium ist dabei als Dampf, Kondensat, Wasser und/oder Luft, insbesondere als eine mehrphasige Strömung ausgebildet. Dabei wird der Schwingkörper zumindest teilweise in einem mit dem Medium durchströmten Rohrquerschnitt und/oder Armaturenquerschnitt eingesetzt. Der Schwingkörper wird dabei von dem Medium umströmt oder er ist nahe der Strömung, insbesondere an der Strömungsoberfläche angeordnet, so dass er die Strömung zumindest teilweise berührt. Durch die Strömung des Mediums wird der Schwingkörper zur Schwingung angeregt. Das dadurch resultierende Schwingverhalten wird mittels des Schwingungswandlers detektiert und repräsentative Signale des Schwingungsverhaltens bereitgestellt. Dabei beinhaltet das detektierte Schwingverhalten insbesondere die Detektion der Amplitude und Frequenz der Schwingung. Die so detektierte Amplitude und Frequenz der Schwingung wird über ein elektrisches Signal des Schwingungswandlers an der Messstelle ausgegeben. Der Schwingungswandler kann dabei beispielsweise so ausgebildet sein, dass die Schwingungen von einem Piezosensor, einem Mikrofon oder über ein Laservibrometer erfasst werden.

Bevorzugt werden gemäß einer Weiterbildung des erfindungsgemäßen Verfahrens an der Messstelle Gleichtaktschwingungen und Gegentaktschwingungen der beiden miteinander gekoppelten Bereiche des Schwingkörpers aufgenommen. Die Anregung des Schwingkörpers erfolgt bevorzugt über den zumindest teilweise in die Strömung des Mediums hineinragenden ersten Bereichs des Schwingkörpers, wobei sowohl der erste in der Strömung befindliche Bereich als auch der zweite außerhalb der Strömung vorgesehene Bereich zum Schwingen angeregt wird. Aufgrund einer elastischen Kopplung der beiden Bereiche des Schwingkörpers miteinander und mit einem Grundkörper des Strömungssensors führen die beiden Bereiche des Schwingkörpers Gleichtaktschwingungen und Gegentaktschwingungen aus, auch als gleichsinnige und gegensinnige Schwingungen bezeichnet. Dabei ist der Schwingkörper so ausgelegt, dass die Gleichtakt- und Gegentaktschwingungen gleichzeitig mit unterschiedlichen Frequenzen auftreten. Unter gleichsinnigen Schwingungen bzw. Gleichtaktschwingungen der beiden Bereiche sind, ausgehend vom Verbindungsbereich der beiden sich vorzugsweise in entgegengesetzte Richtungen erstreckenden Bereiche des Schwingkörpers, Schwingungen zu verstehen, bei denen die beiden miteinander gekoppelten Bereiche des Schwingkörpers sich in dieselbe Richtung bewegen. Unter Gegentaktschwingungen sind Schwingungen der beiden Bereiche zu verstehen, bei denen diese, ebenfalls ausgehend vom Verbindungsbereich der beiden Bereiche des Schwingkörpers, in entgegengesetzte Richtungen schwingen. Durch vorzugsweise eine Frequenzanalyse , auch bezeichnet als Spektralanalyse, des Schwingverhaltens des Schwingkörpers werden bevorzugt zwei sich im Schwingkörper ausbildende Resonanzfrequenzen und deren Amplituden der Gleichtakt- und Gegentaktschwingungen gleichzeitig erfasst.

Durch das Aufnehmen und die Analyse des Schwingverhaltens des Schwingkörpers, bestehend aus zwei elastisch gekoppelten Bereichen, die sich vorzugsweise in zwei unterschiedlichen Medien befinden, wobei sich der erste Bereich in der mehrphasigen Strömung und der zweite Bereich des Schwingkörpers bevorzugt in der Umgebungsluft angeordnet ist, werden Amplitude und Frequenz zweier Resonanzstellen erfasst. Dadurch ist es möglich Massentransportvorgänge mehrphasiger Strömungen zu erfassen, wodurch die Bestimmung des Kondensatniveaus und seiner Strömungsgeschwindigkeit sowie des Niveaus des Dampfes und dessen Strömungsgeschwindigkeit möglich ist. Mit Hilfe des hinterlegten Referenzdatensatzes lassen sich Funktionsfähigkeit, Druckstufe, Kondensatmenge und Dampfverlustmenge eines Kondensatableiters eindeutig ermitteln. Mehrdeutige Ergebnisse werden durch die Kombination der Amplitude und Frequenz der beiden Resonanzstellen ausgeschlossen. Über diese Kombination bzw. Eigenschaften der Strömung ist es möglich, die Funktionsfähigkeit des Kondensatableiters zu bestimmen.

Vorzugsweise ist der Strömungssensor zwischen dem Rohr und dem Kondensatableiter vorgesehen, insbesondere mittels eines ersten dem Rohr zugeordneten Flansches und einem zweiten, dem Kondensatableiter zugeordneten Flansches lösbar mit dem Rohr und dem Kondensatableiter verbunden. Beim Vorsehen des Strömungssensors an dieser Position ist vorteilhaft, dass ein in solchen Anlagen auftretender Fremdschall beispielsweise ausgehend von einem Kondensatableiter so gering ist, dass er die Messungen an dieser Stelle kaum bis nahezu gar nicht beeinflusst. Dabei kann der Strömungssensor beispielsweise zwischen den beiden Flanschen eingeklemmt sein und die beiden Flansche miteinander verschraubt sein, so dass der Strömungssensor fest zwischen den beiden Flanschen angeordnet ist.

In einer Ausführungsform werden zur Auswertung des Schwingverhaltens gemäß Schritt c) Referenzmessungen durchgeführt und/oder dadurch Datensätze erstellt, die zum Abgleich mit den an der Messstelle gemessenen Daten verwendet werden. Die Datensätze sind dabei so ausgebildet, dass bestimmten Eigenschaften der Strömung, wie beispielsweise die Kondensatmenge, die Verlustmenge und die Strömungsgeschwindigkeit, für verschiedene Betriebszustände vorgegeben sind. So kann beispielsweise bei der Messung von Amplitude und Frequenz und bei einem bestimmten Niveau und einer mittleren Strömungsgeschwindigkeit bei einer bestimmten Kondensatmenge auf einen für diese Bereiche bekannten Betriebszustand und somit auf die Funktionsfähigkeit des Kondensatableiters geschlossen werden. Durch die Verwendung eines solchen Systems ist eine Ableitertyp unabhängige Funktionsprüfung möglich. Als Ableiterdiagnosesystem kann es somit unabhängig vom nachgeschalteten Ableitertyp universell eingesetzt werden.

Bevorzugt werden bei der Überwachung eines Kondensatableiters gemäß einem Ausführungsbeispiel zur Auswertung des Strömungsverhaltens gemäß Schritt c) auf Grundlage von mittels zuvor erfolgter Referenzmessungen erstellten Datensätzen, die an der Messstelle gemessenen Daten mit den Datensätzen abgeglichen. Dadurch ist eine einfache und zugleich schnelle Auswertung der gemessenen Daten sowie eine zuverlässige Bestimmung über die im Zusammenhang mit dem Schwingverhalten des Schwingkörpers zu ermittelnden Größen möglich, mit denen eine Aussage über die Funktionsfähigkeit des Kondensatableiters getroffen werden kann. Der Abgleich zwischen den gemessenen Daten und den zuvor erstellten Datensätzen erfolgt vorzugsweise mithilfe einer elektronischen Auswerteeinrichtung, in der gleichzeitig die zuvor erstellten Datensätze hinterlegt sind.

In einer bevorzugten Ausführungsform erfolgt das Auswerten gemäß Schritt c) über eine elektronische Auswerteeinrichtung, wie z.B. ein künstliches neuronales Netz (KNN), Fuzzy-Logik, Chanel Relationships Methods, Principal Component Analyses (PCA).

Eine andere Weiterbildung des erfindungsgemäßen Verfahrens sieht vor, dass zur Auswertung des Strömungsverhaltens mittels der elektronischen Auswerteeinrichtung gemäß Schritt c) die Amplituden und die Resonanzfrequenzen der erfassten Gleichtakt-und Gegentaktschwingungen der vorzugsweise beiden Bereiche des Schwingkörpers bestimmt werden. Anhand der Größe der Amplituden und anhand der sich durch die Gleichtakt- und Gegentaktschwingungen am Schwingungskörper ausbildenden unterschiedlichen Resonanzfrequenzen kann durch Abgleich mit den bereits ermittelten Datensätzen eine Auswertung erfolgen, über die sich eine Aussage zu bestimmten den Betriebszustand des Kondensatableiters wiederspiegelnden Größen, wie zum Beispiel die Funktionsfähigkeit, die Kondensatmenge, die Druckstufe sowie die Dampfverlustmenge des Kondensatableiters, treffen lässt.

Bevorzugt werden zur Auswertung des Strömungsverhaltens gemäß Schritt c) die Amplituden und ihre Resonanzfrequenzen der erfassten Gleichtakt- und Gegentaktschwingungen der beiden Bereiche des Schwingungskörpers über eine Frequenzanalyse, vorzugsweise eine Fourier-Analyse bestimmt. Diese Art der Frequenz- und Amplitudenbestimmung bewirkt eine einfache Möglichkeit zur Abbildung der entstehenden Schwingungen des durch die Strömung angeregten Schwingkörpers. Mittels der Fourier-Analyse lassen sich insbesondere die Frequenzen der einzelnen Schwingungen und deren Amplituden auf vorteilhafte Weise ermitteln.

Vorzugsweise wird bei der Auswertung gemäß Schritt c) ein Zusammenhang zwischen einerseits einer Funktionsfähigkeit, einer Druckstufe, einer Kondensatmenge und einer Dampfverlustmenge und andererseits einer Resonanzfrequenz und einer Amplitude, vorzugsweise zweier Resonanzfrequenzen und deren Amplituden, an dem Strömungssensor hergestellt. Durch diesen Zusammenhang kann aus einem Schwingungsspektrum der aktuelle Betriebszustand eines Ableiters ermittelt werden.

In einer weiteren Ausführungsform wird das Kondensatniveau des Mediums über eine Abhängigkeit der Resonanzfrequenz und Amplitude der Gleich- und Gegentaktschwingung von einer Dämpfung bestimmt. Ist bei der Auswertung einer Wasser-DampfStrömung eine Änderung der Resonanzfrequenz und Amplitude zu erkennen, lässt sich daraus mittels einer geeigneten Auswertung das Kondensatniveau ermitteln. Beispielsweise bedeuten eine Änderung der Amplitude und eine Verringerung der Resonanzfrequenz der Gleichtakt- und Gegentaktschwingung, unter der Annahme einer konstanten Dichte des Mediums, eine stärkere Dämpfung als Folge eines Niveauanstiegs in der Rohrleitung.

Bevorzugt wird das Kondensatniveau in der mehrphasigen Strömung und daraus resultierender Dämpfung des Mediums über eine Abhängigkeit der Veränderung der Resonanzfrequenz und Amplitude der Gleichtakt- und Gegentaktschwingung am Schwingkörper bestimmt. In der Veränderung der Resonanzfrequenz und der Amplitude der Gleichtakt- und Gegentaktschwingung der beiden Bereiche des Schwingkörpers, lässt sich insbesondere ein Maß für das Kondensatniveau in der mehrphasigen Strömung und der damit verbundenen Dämpfung des durch die Armatur strömenden Mediums ableiten, welches vorzugsweise als mehrphasige Strömung ausgebildet ist. Die Dämpfung des Mediums wirkt sich unmittelbar auf das Schwingverhalten des ersten, zumindest teilweise in die Strömung und damit auch in das Kondensat hineinragenden Bereichs des Schwingkörpers aus. Bei dem gekoppelten erfindungsgemäßen Schwingkörper führt diese Einwirkung zur gleichzeitigen Änderung von Amplitude und Frequenz der Gleichtakt- und Gegentaktschwingung der beiden Bereiche.

Vorzugsweise wird eine Strömungsgeschwindigkeit des Mediums, vorzugsweise der mehrphasigen Strömung, über eine Abhängigkeit der Amplitude und Resonanzfrequenz der Gleichtakt- und Gegentaktschwingung von der Strömungsgeschwindigkeit und einer bzw. der Dämpfung bestimmt. Steigt beispielsweise die Amplitude der Gleichtakt- und Gegentaktschwingung bei konstanter Resonanzfrequenz, bedeutet das unter der Annahme einer konstanten Dichte des Mediums, dass die Strömungsgeschwindigkeit, und somit auch die Durchflussmenge, steigt.

In einer weiteren Ausführungsform wird die Druckstufe über eine Abhängigkeit der Resonanzfrequenz und Amplitude der Gleichtakt- und Gegentaktschwingung von der Dämpfung bestimmt. Bei verschiedenen Druckstufen ändert das Medium seine Eigenschaft, insbesondere seine Dichte. Dadurch ändert sich wiederum die Dämpfung. Anhand der Abhängigkeit der Amplitude und Frequenz von der Dämpfung kann die jeweilige Druckstufe festgestellt werden.

In einer weiteren Ausführungsform wird die Dichte des Mediums über eine Abhängigkeit der Resonanzfrequenz und Amplitude der Gleichtakt- und Gegentaktschwingung von der Dämpfung bestimmt. Anhand der Abhängigkeit der Amplitude und Frequenz von der Dämpfung kann die Dichte des jeweiligen Mediums festgestellt werden.

Bevorzugt wird nach einer Weiterbildung des erfindungsgemäßen Verfahrens eine Temperatur vorzugsweise des Mediums und/oder im Bereich des Rohrs und/oder Kondensatableiters gemessen. Mittels der Temperaturmessung lässt sich eine grundsätzliche Aussage zum Betriebszustand oder der Funktionsfähigkeit des Kondensatableiters im Zusammenhang mit den am Strömungssensor aufgenommenen Daten machen. Mithilfe der Temperaturmessung, die bevorzugt im Bereich der Schwingungsmessung erfolgt, kann insbesondere ermittelt werden, ob ein Stau am Kondensatableiter, aufgrund eines Defekts am Ableiter vorliegt, oder der Kondensatableiter geschlossen ist. Entscheidend für die Bestimmung des Betriebszustandes des Ableiters ist dabei die Angabe, ob die ermittelte Temperatur unterhalb eines bestimmten Temperaturbereiches abfällt, innerhalb dem der Kondensatableiter typischerweise arbeitet. Anhand der gemessenen Temperatur und der gleichzeitig durchgeführten Strömungsmessung lässt sich vorzugsweise mit großer Sicherheit bestimmen, ob ein Stau am Kondensatableiter vorliegt oder der Anlagenteil abgeschaltet ist.

Ein weiterer Aspekt der Erfindung betrifft einen Strömungssensor zur Erfassung von Strömungseigenschaften in einem ein Medium führendes Rohr und/oder Armatur vorgeschlagen. Der Strömungssensor umfasst dabei einen Grundkörper, eine innerhalb des Grundkörpers angeordnete Öffnung, die einen zum Durchströmen des Mediums vorbereiteten Strömungsquerschnitt aufweist, einen benachbart zu dem Strömungsquerschnitt oder in den Strömungsquerschnitt hineinragender Schwingkörper und einen an dem Schwingkörper vorgesehenen Schwingungswandler zum Wandeln der mechanischen Schwingungen in elektrische Signale. Der Strömungssensor zeichnet sich erfindungsgemäß dadurch aus, dass der Schwingkörper einen zumindest teilweise in den Strömungsquerschnitt des als mehrphasige Strömung ausgebildeten Mediums vorgesehenen ersten Bereich und einen außerhalb des Strömungsquerschnitts vorgesehenen zweiten Bereich aufweist, wobei der erste und der zweite Bereich ein gekoppeltes System ausbilden und der Schwingkörper eingerichtet ist, an der Messstelle Schwingungen des ersten Bereiches und des zweiten Bereiches des Schwingkörpers aufzunehmen.

Der Grundkörper und der Schwingkörper sind dabei miteinander verbunden. Bevorzugt weist der Schwingkörper einen zumindest teilweise in den Strömungsquerschnitt vorgesehenen ersten Bereich und einen außerhalb des Strömungsquerschnitts vorgesehenen zweiten Bereich auf, wobei der erste und der zweite Bereich ein gekoppeltes System ausbilden. Durch das gekoppelte System werden an nur einer bevorzugt am zweiten Bereich vorgesehenen Messstelle gleichzeitig die Amplitude und Frequenz der Gleichtakt- und Gegentaktschwingung der beiden Bereiche erfasst. Dadurch werden mehrdeutige Ergebnisse ausgeschlossen und eine eindeutige Zuordnung der Ergebnisse ist somit möglich.

Bevorzugt ist der Schwingkörper derart ausgebildet, dass beim Anregen von nur einem ersten Bereich des Schwingkörpers, der bevorzugt zumindest teilweise in die Strömung hineinragt, gleichsinnige Schwingungen, auch bezeichnet als Gleichtaktschwingungen, und gegensinnige Schwingungen, auch bekannt als Gegentaktschwingungen, durch die beiden miteinander gekoppelten Bereiche des Schwingkörpers erzeugt werden. Die erzeugten Gleichtakt- und Gegentaktschwingungen, wie oben zum Verfahren näher ausgeführt, können an der Messstelle am zweiten Bereich außerhalb der Strömung aufgenommen werden.

Durch die Öffnung des Grundkörpers wird der Strömungsquerschnitt definiert. Dieser weist einen Querschnitt auf, der die Strömung des Mediums nur geringfügig beeinflusst. Durch diese Strömung des Mediums werden Schwingungen angeregt, die der Schwingungswandler erfasst. Zur Erzeugung der Schwingungen ist der Schwingkörper zumindest teilweise in der Strömung angeordnet.

Vorzugsweise ist der Schwingkörper stabförmig ausgebildet und/oder der Grundkörper ringförmig. Dem stabförmigen Schwingkörper können somit allgemeine Berechnungstheorien der Eigenschwingung eines Stabes zugrunde gelegt werden. Die beiden Bereiche des Schwingkörpers sind bevorzugt als Biegebalken mit vorzugsweise kreisförmigem Querschnitt ausgebildet, welche über einen Verbindungsbereich fest miteinander verbunden sind, der im Vergleich zu den beiden Bereichen im Querschnitt erweitert ist. Bevorzugt sind der erste und der zweite Bereich derart am Verbindungsbereich angeordnet, dass diese bevorzugt quer zu ihrer Erstreckungsrichtung ungehindert schwingen können. Dabei ist der Schwingkörper insbesondere aus einem Material mit einem hohen Elastizitätsmodul ausgebildet und/oder gefertigt. Dadurch ist er steif und somit eignet sich durch die Strömung zu Schwingungen anregen zu lassen. Vorteilhaft bei einem ringförmigen Grundkörper ist, dass dieser beispielsweise an einen Rohrquerschnitt anpassbar ist und somit problemlos in jede Anlage integriert werden kann.

Eine andere Ausführungsform des erfindungsgemäßen Strömungssensors sieht vor, dass der Schwingkörper einen seine beiden Bereiche unterteilenden Aufnahmebund oder - kragen aufweist, der fest am Grundkörper aufgenommen und eingerichtet ist, die beiden Bereiche des Schwingkörpers miteinander und mit dem Grundkörper elastisch zu koppeln. Vorzugsweise weist der Aufnahmebund für den Schwingkörper einen kreisförmigen Querschnitt auf, der im Vergleich zu den beiden Bereichen des Schwingkörpers im Durchmesser erweitert ist. Der Aufnahmebund oder -kragen bildet den Verbindungsbereich für den ersten und zweiten Bereich des Schwingkörpers aus, über den die Schwingungen ungehindert zwischen dem ersten und dem zweiten Bereich hin und her geleitet werden. Die Materialstärke des Aufnahmebundes und dessen Durchmesser weisen insbesondere ein vorbestimmtes Verhältnis zu den Längen und den Durchmessern der beiden vorzugsweise als zylindrische Biegebalken ausgebildeten Bereiche des Schwingkörpers auf. Dadurch wird bei Anregung zumindest eines stabförmigen Bereiches des Schwingkörpers, insbesondere quer zu dessen Erstreckungsrichtung, am Aufnahmebund eine Membranschwingung erzeugt und damit eine Gleichtakt- und Gegentaktschwingung der beiden miteinander verbundenen Bereiche des Schwingkörpers ermöglicht.

Der Grundkörper weist einen Durchlass für den Schwingkörper auf, über den vorzugsweise ein erster Bereich in den Strömungsquerschnitt hineinragt. Der Durchlass, dessen Querschnitt grundsätzlich größer ist als der in die Strömung zumindest teilweise hineinragende Bereich des Schwingkörpers, ist in der Art einer Stufenbohrung ausgebildet und weist zwei Abschnitte auf, die unterschiedlich große Querschnitte haben. Der Abschnitt mit dem größeren Querschnitt ist der Peripherie des Grundkörpers zugeordnet, wodurch am Grundkörper ein Absatz mit einer Auflagefläche vorgesehen ist, auf der der Aufnahmebund nur zu einem bestimmten Flächenanteil aufliegt. Ein Großteil des Aufnahmebundes ist freischwingend, wodurch die Membranschwingung am Schwingkörper und damit die gleichsinnigen und gegensinnigen Resonanzschwingungen der Bereiche des Schwingkörpers möglich werden.

In einer bevorzugten Weiterbildung des Schwingkörpers ist vorgesehen, dass der Schwingkörper einen vorzugsweise zylindrischen Aufnahmebund oder -kragen aufweist, an dem auf einander gegenüberliegenden Seiten jeweils ein Biegebalken mit einem vorzugsweise kreisförmigem Querschnitt angeordnet ist. Der Schwingkörper weist zwei bevorzugt koaxial angeordnete Biegebalken auf, die über den Aufnahmebund oder - kragen fest miteinander verbunden sind. Die Biegebalken weisen bevorzugt einen kreisförmigen Querschnitt auf und sind auf einander gegenüberliegenden Stirnseiten des Aufnahmebunds oder -kragens angeordnet. Die Biegebalken weisen vorzugsweise gleiche Durchmesser auf. In einer bevorzugten Ausgestaltung ist der Durchmesser des Aufnahmebunds oder -kragens etwa doppelt so groß wie die Durchmesser der beiden Biegebalken. Der zylindrische Aufnahmebund oder -kragen liegt mit einer Stirnseite auf einer Auflagefläche des Grundkörpers auf. An dieser Stirnseite ist einer der Biegebalken etwa senkrecht abstehend angeordnet und bildet den ersten Bereich des Schwingkörpers aus, welcher in die mehrphasige Strömung zumindest teilweise hineinragt.

In einer weiteren Ausführungsform weist der Durchmesser des Aufnahmebunds oder - kragens zur Materialstärke des Aufnahmebunds oder -kragens ein Verhältnis im Bereich von 5 bis 9, vorzugsweise im Bereich von 6 bis 7 auf. Des Weiteren hat der Durchmesser des Aufnahmebunds oder -kragens zum Durchmesser des jeweiligen Biegebalkens des Strömungssensors ein Verhältnis im Bereich von 1,5 bis 3,5. In einer bevorzugten Ausgestaltung liegt das Verhältnis des Durchmessers des Aufnahmebunds oder -kragens zum Durchmesser des jeweiligen Biegebalkens im Bereich zwischen 2 und 3. Vorzugsweise weist die Länge des jeweiligen Biegebalkens zum Durchmesser des Biegebalkens ein Verhältnis im Bereich von 2 bis 6, besonders bevorzugt ein Verhältnis in einem Bereich zwischen 3 und 4, auf. Mit den vorliegend angegebenen Verhältnissen der Abmessungen von Aufnahmebund oder -kragen und den Biegebalken zueinander ist ein optimales Schwingverhalten des erfindungsgemäßen Schwingkörpers und damit eine sichere Bestimmung der zu ermittelnden Messdaten erreicht.

In einer bevorzugten Ausführungsform ist der Strömungsquerschnitt an den Querschnitt, den das Medium durchströmt, angepasst. Durch das Anpassen des Strömungsquerschnitts werden zusätzliche Verwirbelungen an der Übergangsstelle zwischen Rohrleitung und Strömungssensor vermieden. Somit wird allein durch die Umströmung des Schwingkörpers im Strömungssensor eine Schwingung angeregt. Durch entsprechende Anpassung des Schwingkörpers wird sichergestellt, dass die Funktionsweise eines Ableiters durch den Strömungssensor nicht beeinträchtigt wird.

Vorzugsweise ist der Strömungssensor zum Durchführen eines zuvor beschriebenen Verfahrens eingerichtet. Mittels eines solchen Strömungssensors kann somit die Funktionsfähigkeit eines Kondensatableiters überwacht werden.

Ferner wird erfindungsgemäß eine Überwachungseinrichtung zum Überwachen wenigstens eines Kondensatableiters zum Ableiten eines Kondensats vorgeschlagen. Die Überwachungseinrichtung umfasst dabei wenigstens einen Strömungssensor mit Schwingungswandler und eine Auswerteelektronik. Der Strömungssensor ist, insbesondere nach einer der vorstehenden Ausführungsformen, lösbar mit dem Rohr und/oder Kondensatableiter verbunden, insbesondere nach einem der vorstehenden Ausführungsformen, der lösbar mit dem Rohr und/oder Kondensatableiter verbunden ist. Dabei ist der Strömungssensor benachbart zu dem Rohr und/oder Kondensatableiter angeordnet. Unter benachbart wird im Folgenden verstanden, dass der Strömungssensor bspw. angrenzend an das Rohr und/oder den Kondensatableiter angeordnet ist, zumindest aber in der nächster Nähe bzw. dicht daran.

Vorzugsweise ist der Strömungssensor zwischen dem Rohr und dem Kondensatableiter angeordnet. Dadurch wird die Aufnahme von Fremdschall, z.B. erzeugt und ausgehend vom Kondensatableiter, durch den Schwingkörper vermieden.

In einer weiteren Ausführungsform ist der Strömungssensor mittels eines ersten dem Rohr zugeordneten Flansches und eines zweiten dem Kondensatableiter zugeordneten Flansches lösbar mit dem Rohr und dem Kondensatableiter verbunden. Somit kann der Strömungssensor jederzeit einfach und unkompliziert für bspw. Wartungsarbeiten oder bei einem Defekt ausgetauscht werden. Zudem ist weder eine zusätzliche Anbindungsvorrichtung zum Einsetzen des Strömungssensors in die Anlage notwendig, da die bereits vorhandenen Flansche verwendet werden, noch muss der Strömungssensor manuell in einer vorgegebenen Position gehalten werden.

Vorzugsweise ist der Strömungssensor zwischen dem Rohr und dem Kondensatableiter, vorzugsweise stromaufwärts vor dem Kondensatableiter vorgesehen, insbesondere mittels eines ersten dem Rohr zugeordneten Flansches und einem zweiten dem Kondensatableiter zugeordneten Flansches lösbar mit dem Rohr und dem Kondensatableiter verbunden. Beim Vorsehen des Strömungssensors an dieser Körperschall entkoppelten Position ist vorteilhaft, dass ein in solchen Anlagen auftretender Fremdschall durch beispielsweise eine Schwingung der Rohre und/oder des Kondensatableiters so gering ist, dass er die Messungen an dieser Stelle kaum bis nahezu gar nicht beeinflusst. Dabei kann der Strömungssensor beispielsweise zwischen den beiden Flanschen eingeklemmt sein und die beiden Flansche miteinander verschraubt sein, so dass der Strömungssensor fest zwischen den beiden Flanschen angeordnet ist.

Eine andere Weiterbildung der erfindungsgemäßen Überwachungseinrichtung sieht vor, dass zumindest eine Temperaturmesseinrichtung zum Erfassen einer Temperatur vorzugsweise des Mediums und/oder im Bereich des Rohrs und/oder Kondensatableiters vorzugsweise im Bereich der Schwingungsmessung vorgesehen ist. Mittels der Temperaturmesseinrichtung, die bevorzugt einen Temperaturfühler aufweist, erfolgt bevorzugt eine Temperaturmessung im Bereich des Kondensatableiters. Über die bevorzugt kontinuierlich abgefragte Temperatur kann eine Aussage darüber getroffen werden, ob es zu einem ungewollten Stau von Kondensat im Bereich des Kondensatableiters, aufgrund eines defekten Bauteils gekommen ist, oder ob der Kondensatableiter geschlossen ist. Mithilfe der Temperaturmesseinrichtung kann einfach festgestellt werden, ob die gemessene Temperatur unterhalb eines bestimmten Temperaturbereiches abfällt, innerhalb dem der Kondensatableiter typischerweise arbeitet. Anhand der gemessenen Temperatur und der gleichzeitig durchgeführten Strömungsmessung lässt sich vorzugsweise mit großer Sicherheit bestimmen, ob ein Stau am Kondensatableiter vorliegt oder dieser Anlagenteil abgeschaltet ist.

In einer bevorzugten Ausführungsform weist die Überwachungseinrichtung eine elektronische Auswerteeinrichtung auf, welche zur Auswertung der Signale des Schwingungswandlers und zum Abgleich der eingehenden Signale des Schwingungswandlers des Strömungssensors mit einem in der elektronische Auswerteeinrichtung hinterlegten Datensatz eingerichtet ist.

Der Datensatz besteht dabei insbesondere aus den ermittelten Referenzdaten. Aus diesem Datensatz und den eingehenden Signalen gewinnt die elektronische Auswerteeinrichtung Informationen über die Eigenschaften der Strömung und zeigt somit den Betriebszustand des Kondensatableiters. Bevorzugt sind eine Vielzahl von Datensätze in der elektronischen Auswerteeinrichtung hinterlegt, welche die relevanten Daten, wie z.B. Funktionsfähigkeit, Kondensatmenge, Dampfverlustmenge und Druckstufe vorzugsweise sämtlicher Betriebszustände eines Ableiters mit den dazugehörigen Sensordaten, wie z.B. Amplitude und Frequenz der Gleichtakt- und Gegentaktschwingung und Temperatur beinhalten. Zudem ist die elektronische Auswerteeinrichtung dazu eingerichtet die gemessenen Daten mit den hinterlegten Datensätzen zu vergleichen. Sollten die gemessenen Daten beispielsweise nicht exakt zu einem hinterlegten Datensatz passen, so lässt sich über die Auswerteeinrichtung eine interpolierende Bestimmung der relevanten Daten vornehmen.

Bevorzugt ist in einer weiteren Ausgestaltung der erfindungsgemäßen Überwachungseinrichtung vorgesehen, dass die Auswerteeinrichtung Bestandteil einer elektronischen Steuereinheit ist, und/oder die Steuereinheit signalleitend mit zumindest einer Energieerzeugungseinrichtung, vorzugsweise einem Thermogenerator, und einer Kommunikationseinheit für eine Datenübertragung verbunden ist. Die elektronische Steuereinheit ist vorzugsweise mit einer Energieerzeugungseinrichtung und einer Kommunikationseinheit gekoppelt und über eine kabelgebundene oder drahtlose Datenverbindung mit dem Strömungssensor verbunden. An jeder Messstelle ist mittels der Steuereinheit, der Energieerzeugungseinrichtung sowie der Kommunikationseinheit bevorzugt ein Sensorknoten ausgebildet. Ein derartiger Sensorknoten kommuniziert über die Kommunikationseinheit vorzugsweise drahtlos direkt bzw. und/oder über andere Sensorknoten mit einem tragbaren Abfrage- und Ausgabegerät oder einer stationären Basiststation. Über das tragbare Abfrage- und Ausgabegerät ist eine Abfrage der Messdaten von den verschiedenen Sensorknoten und deren Visualisierung möglich. Auf diese Weise lässt sich eine zuverlässige Fernüberwachung der Funktion von einem oder auch einer Vielzahl von Kondensatableitern gewährleisten. Anstelle eines tragbaren Abfrage- und Ausgabegerätes können die Daten von den verschiedenen Sensorknoten auch an eine ortsfeste Überwachungsstation über beispielsweise ein Datennetzwerk übertragen werden. An einer solchen Überwachungsstation lassen sich beispielsweise Messdaten von Sensorknoten verschiedener Industrieanlagen an unterschiedlichen Standorten zusammenführen. Bevorzugt ist der Energieerzeugungseinrichtung, welche vorzugsweise als Thermogenerator ausgebildet ist, ein Energiespeicher zugeordnet, mittels dem eine bevorzugt konstante Energieversorgung der elektronischen Steuereinheit des Sensorknotens sichergestellt werden kann.

Nachfolgend wird die Erfindung anhand von Ausführungsformen unter Bezugnahme auf die begleitenden Figuren beispielhaft näher erläutert. Es zeigen:
- Fig. 1: einen Strömungssensor in einer perspektivischen Ansicht,
- Fig. 2: den Strömungssensor der Figur 1 in einer Schnittansicht,
- Fig. 3: den Strömungssensor der Figur 1 in einer weiteren Schnittansicht,
- Fig. 4: eine Anordnung eines Kondensatableiters und eines Strömungssensors,
- Fig. 5: eine schematische Ansicht eines Ausführungsbeispiels einer Überwachungseinrichtung,
- Fig. 6: eine schematische Ansicht eines weiteren Ausführungsbeispiels, und
- Fig. 7a,b): Vorderansicht und Draufsicht auf einen erfindungsgemäßen Sensorknoten.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente können unterschiedlich skaliert sein.

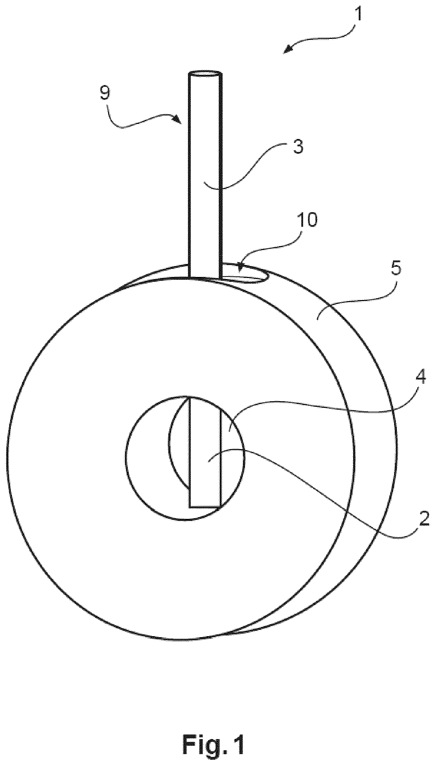

Fig. 1 zeigt einen Strömungssensor 1 mit einem Schwingkörper 9 und einem Grundkörper 5, der ringförmig ausgebildet ist. Der Schwingkörper 9 ist dabei stabförmig ausgebildet und weist einen ersten Bereich 2 und einen zweiten Bereich 3 auf. In dem Grundkörper 5 ist ein Durchlass 10 vorgesehen, in dem der Schwingkörper 9 angeordnet ist. Der Grundkörper 5 weist eine Öffnung 4 mit einem vorbestimmten Strömungsquerschnitt auf. In die Öffnung 4 ragt der erste Bereich 2 des Schwingkörpers 9 hinein. Alternativ kann der Schwingkörper 9 so ausgebildet sein, dass der erste Bereich an den Strömungsquerschnitt für das Medium angrenzt, also benachbart zu dem Strömungsquerschnitt angeordnet ist und somit die Strömungsoberfläche zumindest teilweise berührt. Durch den vorbestimmten Querschnitt 4 strömt das Medium, wie bspw. eine mehrphasige Strömung, beispielsweise Dampf und Kondensat. Der zweite Bereich 3 ragt oberhalb des Durchlasses 10 aus dem Grundkörper 5 hinaus.

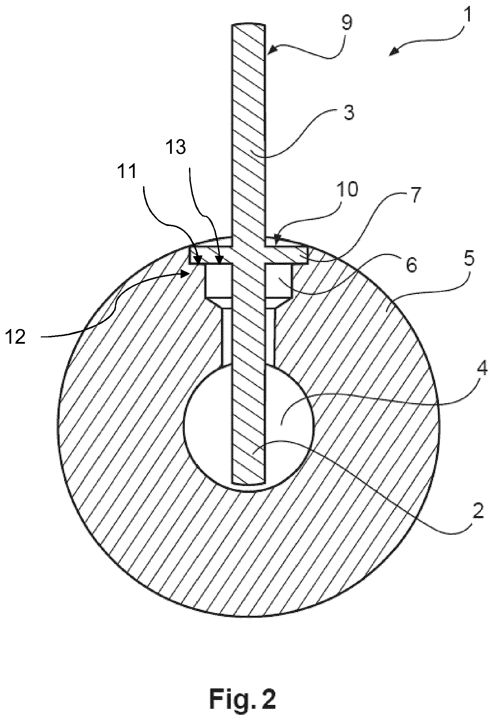

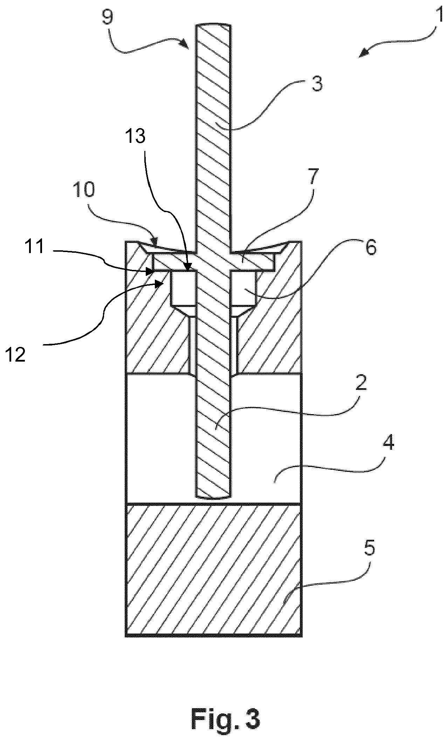

Die Figuren 2 und 3 zeigen eine Schnittansicht des Strömungssensors 1. Zusätzlich zur Fig. 1 ist in den Fig. 2 und 3 zu erkennen, dass der erste Bereich 2 und der zweite Bereich 3 in einem Verbindungsbereich 7 miteinander verbunden sind. Der Verbindungsbereich 7 ist dabei so ausgebildet, dass er durch den Durchlass 10 in den Grundkörper 5 eingesetzt wurde und auf einer Auflagefläche 11 eines Absatzes 12 einer Stufenbohrung 6 aufliegt. Der erste Bereich 2 ragt durch die Bohrung 6 in die Öffnung 4 hinein. Der zweite Bereich 3 ragt über den Grundköper 5 hinaus. Der Schwingkörper 9 weist zwei bevorzugt koaxial angeordnete Biegebalken zur Ausbildung des ersten und zweiten Bereiches 2, 3 auf, die über den als Aufnahmebund oder -kragen 7' ausgebildeten Verbindungsbereich 7 fest miteinander verbunden sind. Die Biegebalken weisen bevorzugt einen kreisförmigen Querschnitt auf und sind auf einander gegenüberliegenden Stirnseiten des Aufnahmebunds oder -kragens 7' angeordnet. Die Biegebalken 2', 3' weisen vorzugsweise gleiche Durchmesser auf. Der Aufnahmebund oder -kragen 7' ist im Durchmesser größer als beide Biegebalken 2', 3'. Der zylindrische Aufnahmebund oder -kragen 7' liegt mit einer Stirnseite 13 auf einer Auflagefläche 11 des Grundkörpers 5 auf. An dieser Stirnseite 13 ist der Biegebalken 2 etwa senkrecht abstehend angeordnet und bildet den ersten Bereich des Schwingkörpers 9 aus, welcher in die mehrphasige Strömung zumindest teilweise hineinragt.

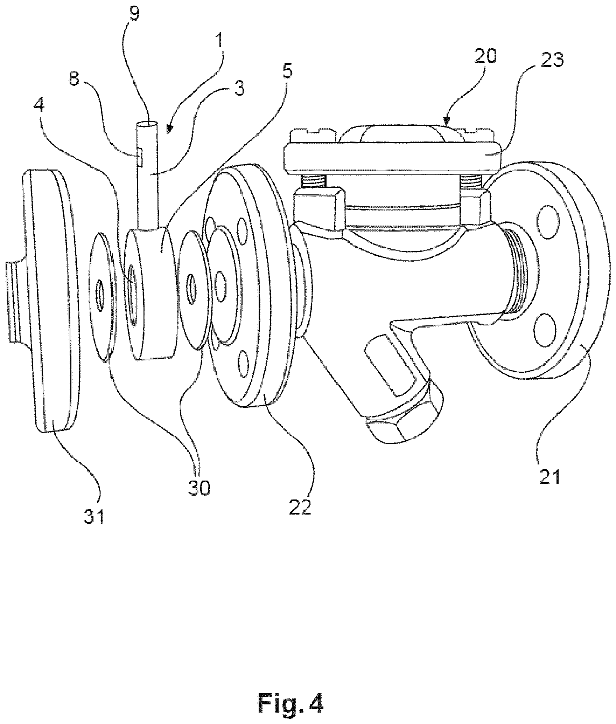

Fig. 4 zeigt einen Zusammenbau eines Kondensatableiters 20 mit einem Strömungssensor 1. Der Zusammenbau des Strömungssensors 1 mit dem Kondensatableiter 20 ist dabei in einer Explosionsdarstellung gezeigt. Der Kondensatableiter 20 weist ein Gehäuse 23 auf. An dem Gehäuse 23 sind zwei Kondensatableiterflansche 21 und 22 angeordnet, die üblicherweise an einem ein Medium führendes Rohr befestigt werden. Zwischen dem Kondensatableiterflansch 22 und einem Rohrflansch 31, der an einem Rohr vorgesehen ist, ist der Strömungssensor 1 angeordnet. Zwischen dem Strömungssensor 1 und dem Kondensatableiterflansch 22 und dem Rohrflansch 31 ist jeweils eine Dichtung 30 vorgesehen. Die Dichtungen 30, der Kondensatableiterflansch 22, der Rohrflansch 31 und die Öffnung 4 weisen einen Querschnitt derselben Größe auf. Dieser Querschnitt ist dabei genauso groß, wie der Querschnitt eines Rohres, das an den Rohrflansch 31 angeschlossen wird.

Dadurch werden die Strömungseigenschaften des Mediums beim Durchströmen der Öffnung 4 in Richtung des Kondensatableiters 20 nicht verändert. Somit sind die mittels des Schwingkörpers 9 erzeugten Schwingungen die, die durch die Umströmung angeregt werden. Über die Messstelle 8 werden diese erzeugten Schwingungen vom Schwingungswandler detektiert und an eine Auswerteeinrichtung zum Auswerten der erhaltenen Daten weitergeleitet. Bei mehreren Strömungssensoren (Sensorknoten) in einem Kondensatableitersystem können die Daten an eine zentrale Steuereinheit (Basisstation) übermittelt werden und durch diese an eine Warte geleitet werden.

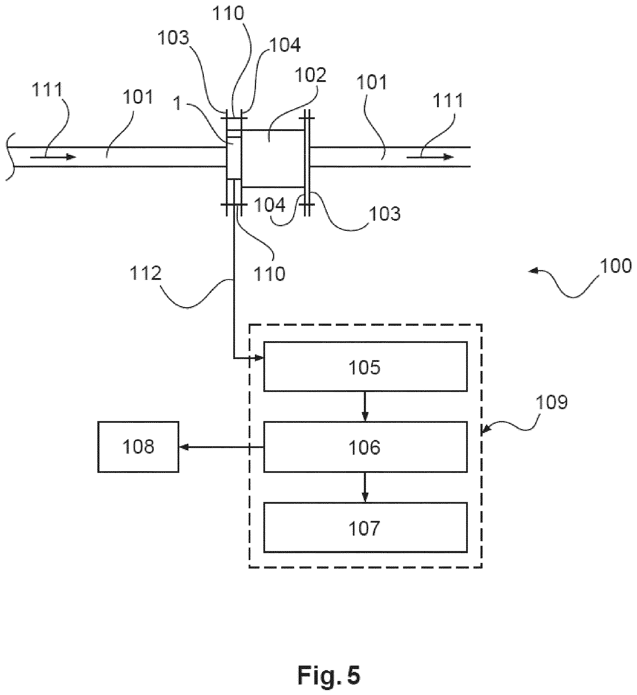

Figur 5 zeigt schematisch eine Überwachungseinrichtung 100. Die Überwachungseinrichtung 100 weist zwei Rohre 101, eine Armatur 102 und eine elektronische Auswerteeinrichtung 109 auf. Die Rohre 101 weisen jeweils einen Rohrflansch 103 auf, der über eine lösbare Verbindung 110, insbesondere eine Verschraubung, mit einem der Armatur 102 zugeordneten Armaturenflansch 104 verbunden ist. Die Rohre 101 führen jeweils ein Medium wie beispielsweise eine mehrphasige Strömung gebildet aus Dampf und Wasser. In Strömungsrichtung 111 des Mediums ist stromaufwärts vor der jeweiligen Armatur 102 ein Strömungssensor 1 angeordnet. Der Strömungssensor 1 ist dabei zwischen dem jeweiligen Rohrflansch 103 und dem Armaturenflansch 104 eingeklemmt.

Der Strömungssensor 1 erfasst die Strömung des Mediums und stellt Signale bereit, die repräsentativ für das Strömungsverhalten sind. Die Signale werden über einen Schwingungswandler 112 an die elektronische Auswerteeinrichtung 109 gesendet. Der Schwingungswandler 112 ist mit der Auswerteelektronik 109 fest verdrahtet oder drahtlos verbunden. Die elektronische Auswerteeinrichtung 109 nimmt die gesendeten Signale in einem Inputbereich 105 auf und speichert diese. In der elektronischen Auswerteeinrichtung 109 ist zudem ein Datensatz 107 hinterlegt, der Daten aus Referenzmessungen enthält. Ein solcher Datensatz 107 enthält dabei bestimmte Eigenschaften der Strömung wie beispielsweise das Kondensatniveau und die Strömungsgeschwindigkeit für verschiedene Betriebszustände, also für das Ableiten ohne Dampfdurchschlag und mit Dampfdurchschlag und ohne Ableiten. Der Datensatz 107 und die Daten aus dem Inputbereich 105 werden in einem Schritt 106 verarbeitet, also miteinander abgeglichen und ausgewertet. Durch die Auswertung wird der genaue Betriebszustand, also die Funktionsfähigkeit, die Kondensatmenge, die Dampfverlustmenge und die Druckstufe genau bestimmt. In einem weiteren Schritt werden die Ergebnisse an ein Handmessgerät 108 ausgegeben. Alternativ können diese auch an eine Basisstation 108 geleitet werden und von dort zu einer Warte. Dabei können die Daten vom Sensorknoten zum Handmessgerät und/oder zur Basisstation per Funk übermittelt werden. Dadurch können mehrere Anwender die Funktionsfähigkeit jeder einzelnen im System vorhandenen Armaturen 102 mit dem Hintergrund des gesamten Systems überwachen und zu jedem Zeitpunkt genau bestimmen.

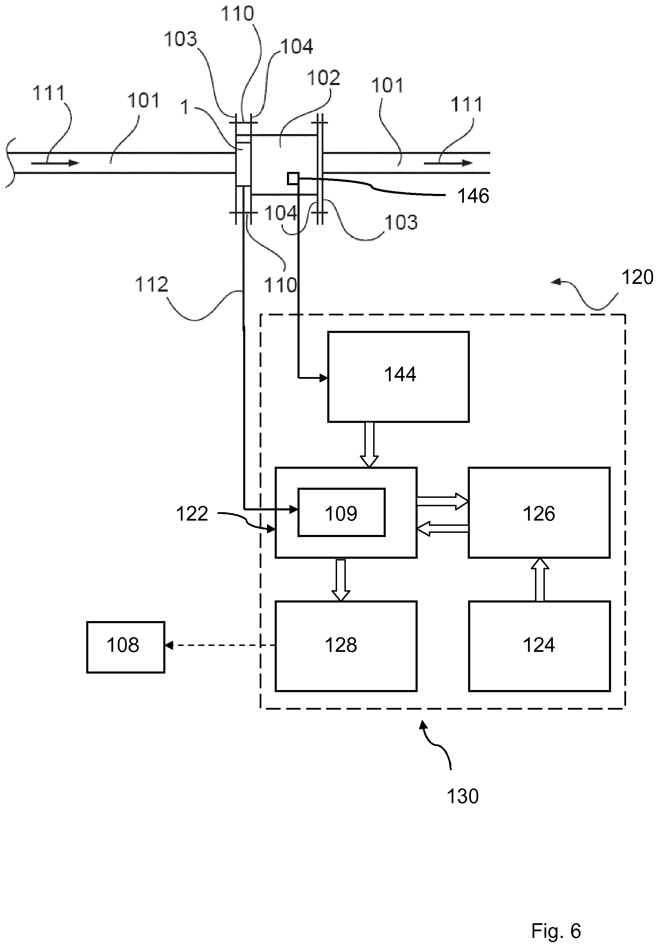

In Figur 6 ist ein weiteres Ausführungsbeispiel einer schematisch dargestellten Überwachungseinrichtung 120 gezeigt. Die Überwachungseinrichtung 120 weist wiederum zwei Rohre 101, eine Armatur 102 und eine Auswerteeinrichtung 109 auf. Die Auswerteeinrichtung 109 ist Teil einer elektronischen Steuereinheit 122, die zusammen mit einer Energieerzeugungseinrichtung 124, einer Energiespeichereinheit 126, einer Kommunikationseinheit 128, sowie einer Temperaturmesseinrichtung 144 einen Sensorknoten 130 ausbildet. Der Sensorknoten ist insbesondere über seine Auswerteeinrichtung 109 Daten übertragend mit dem Schwingungswandler 112 und dem Strömungssensor 1 gekoppelt. Mittels des Sensorknotens 130 ist eine Fernüberwachung der Armatur 102 gewährleistet. Durch die Fernüberwachung können mögliche Defekte der Armatur 102 sowohl frühzeitig als auch einfach und vor allem sicher erkannt werden. Bevorzugt werden die durch den Strömungssensor 1 erfassten Daten von der Auswerteeinrichtung 109 aufgenommen und von der Steuereinheit 122 über die Kommunikationseinheit 128 bevorzugt drahtlos an eine Basisstation 108 oder auch ein tragbares Abfrage- und Ausgabegerät übermittelt. Zur Überwachung des Betriebszustandes der Armatur 102 ist zudem eine mit der Steuereinheit verknüpfte Temperaturmesseinrichtung 144 vorgesehen. Die Temperaturmesseinrichtung 144 weist im vorliegenden Ausführungsbeispiel einen Temperaturfühler 146 auf, der an der Armatur 102 angeordnet ist.

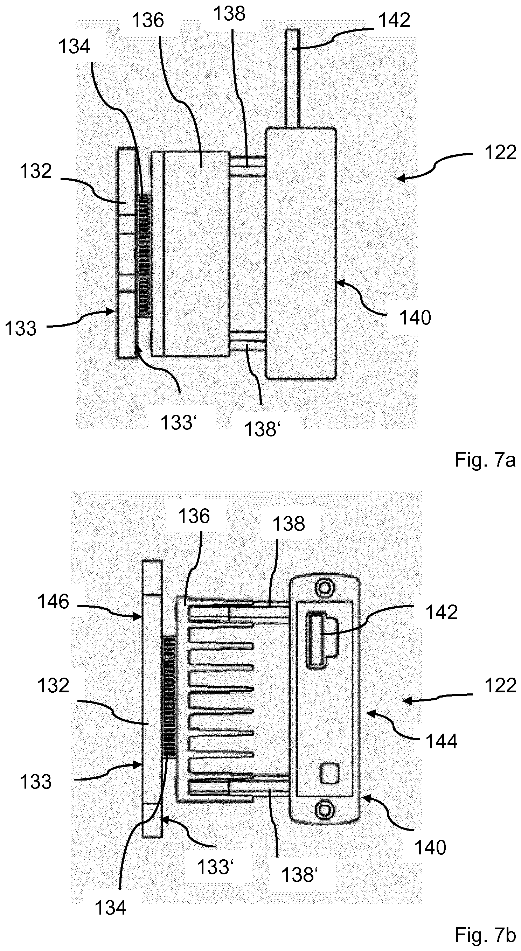

In den Figuren 7a und b sind verschiedene Ansichten des Sensorknotens 130 dargestellt. Die bevorzugt als Thermogenerator ausgebildete Energieerzeugungseinrichtung 124 weist eine Trägerplatte 132 auf, die mit einer Grundfläche 133 bevorzugt direkt an einem Heizkörper, wie zum Beispiel der zu überwachenden Armatur 102 befestigt wird. An der der gegenüberliegenden Grundflächen 133' der Trägerplatte 132 ist ein Peltierelement 134 angeordnet. Mittels des Peltierelements 134 werden durch den vorhandenen Temperaturunterschied auf beiden Seiten des Peltierelements geringe Mengen an elektrischer Energie erzeugt, die genügen den Sensorknoten 130 zu betreiben. Des Weiteren ist ein Kühlkörper 136 mit einer Vielzahl an Kühlrippen am Peltierelement 134 angeordnet, mittels dem der Temperaturunterschied am Peltierelement vergrößert wird und damit die Leistungsfähigkeit der Energieerzeugungseinrichtung 124 verbessert wird. Über Abstandshalter 138, 138' ist am Kühlkörper 136 ein Gehäuse 140 angeordnet, innerhalb dem die Energiespeichereinheit 126, die Steuereinheit 122, die Temperaturmesseinrichtung 144 und die Kommunikationseinheit 128 angeordnet sind, welche zusammen mit der Energieerzeugungseinrichtung 124 den Sensorknoten 130 ausbilden. Mit Hilfe der im vorliegenden Ausführungsbeispiel als Funkmodul 142 ausgebildeten Kommunikationseinheit 128 (Fig 6), ist dann eine Datenübertragung zu einem tragbaren Abfrage- und Ausgabegerät 108 oder zu einer Basisstation 108 möglich. Von der ortsgebundenen Basisstation kann eine Übertagung der erfassten Messdaten zu einer zentralen Überwachungsstation erfolgen, welche sich nicht am eigentlichen Ort der Überwachung befindet. Im Gehäuse 140 ist zudem eine Temperaturmesseinrichtung 144 vorgesehen, die mit einem an der Trägerplatte angeordneten Temperaturfühler 146 gekoppelt ist.

## Patentansprüche

1. Verfahren zur Überwachung eines Kondensatableiters (20), umfassend die Schritte:
a) Vorsehen eines Strömungssensors (1) zur Erfassung von Strömungseigenschaften in einem ein Medium führendes Rohr und/oder Armatur, wobei das Medium als mehrphasige Strömung ausgebildet ist,
b) Detektieren eines Schwingverhaltens an einer an einem Schwingkörper (9) des Strömungssensors (1) vorgesehenen Messstelle (8) mittels eines Schwingungswandlers (112),
c) Elektronisches Auswerten des Schwingverhaltens des Schwingkörpers (9),
wobei an der Messstelle (8) Schwingungen eines ersten Bereiches (2) des Schwingkörpers (9), der zumindest teilweise in einer oder benachbart zu der Strömung des Mediums vorgesehenen ist, und eines außerhalb der Strömung vorgesehenen zweiten Bereiches (3) des Schwingkörpers (9) aufgenommen werden.

2. Verfahren nach Anspruch 1, **dadurch gekennzeichnet, dass** an der Messstelle gleichzeitig Gleichtaktschwingungen und Gegentaktschwingungen der beiden miteinander gekoppelten Bereiche des Schwingkörpers aufgenommen werden.

3. Verfahren nach einem der Ansprüche 1 und 2, **dadurch gekennzeichnet, dass** zur Auswertung des Strömungsverhaltens gemäß Schritt c) Referenzmessungen durchgeführt werden und/oder dadurch Datensätze erstellt werden, die zum Abgleich mit den an der Messstelle (8) gemessen Daten verwendet werden.

4. Verfahren nach einem der vorstehenden Ansprüche, **dadurch gekennzeichnet, dass** bei der Auswertung gemäß Schritt c) ein Zusammenhang zwischen einer Funktionsfähigkeit, einer Druckstufe, einer Kondensatmenge sowie einer Dampfverlustmenge und einer Resonanzfrequenz und einer Amplitude, vorzugsweise zweier Resonanzfrequenzen und deren Amplituden, an dem Strömungssensor (1) hergestellt wird.

5. Strömungssensor (1) zur Erfassung von Strömungseigenschaften in einem ein Medium führendes Rohr und/oder Armatur, insbesondere Kondensatableiter (20), umfassend:
- einen Grundkörper (5),
- einer innerhalb des Grundkörpers (5) angeordneten Öffnung (4), die einen zum Durchströmen des Mediums vorbereiteten Strömungsquerschnitt aufweist,
- einen benachbart zu dem Strömungsquerschnitt oder in den Strömungsquerschnitt hineinragender Schwingkörper (9) und
- einen an dem Schwingkörper (9) vorgesehenen Schwingungswandler (112) zum Wandeln von Schwingungen in elektrische Signale,
**dadurch gekennzeichnet, dass** der Schwingkörper (9) einen zumindest teilweise in dem Strömungsquerschnitt des als mehrphasige Strömung ausgebildeten Mediums vorgesehenen ersten Bereich (2) und einen außerhalb des Strömungsquerschnitts vorgesehenen zweiten Bereich (3) aufweist, wobei der erste und der zweite Bereich ein gekoppeltes System bilden und der Schwingkörper (9) eingerichtet ist, an der Messstelle (8) Schwingungen des ersten Bereiches (2) und des zweiten Bereiches (3) des Schwingkörpers (9) aufzunehmen.

6. Strömungssensor (1) nach Anspruch 5, **dadurch gekennzeichnet, dass** der Schwingkörper (9) stabförmig ausgebildet ist und/oder der Grundkörper (5) ringförmig.

7. Strömungssensor (1) nach einem der Ansprüche 5 oder 6, **dadurch gekennzeichnet, dass** der Schwingkörper (9) einen seine beiden Bereiche (2, 3) unterteilenden Aufnahmebund oder -kragen (7') aufweist, der fest am Grundkörper (5) aufgenommen und eingerichtet ist, die beiden Bereiche (2, 3) des Schwingkörpers (9) miteinander und mit dem Grundkörper (5) elastisch zu koppeln.

8. Strömungssensor (1) nach einem der Ansprüche 5 bis 7, **dadurch gekennzeichnet, dass** der Schwingkörper (9) einen zylindrischen Aufnahmebund oder -kragen (7') aufweist, an dem auf einander gegenüberliegenden Seiten jeweils ein Biegebalken (2', 3') mit einem vorzugsweise kreisförmigen Querschnitt angeordnet ist.

9. Strömungssensor (1) nach einem der Ansprüche 5 bis 8, **dadurch gekennzeichnet, dass** der Durchmesser des Aufnahmebunds oder -kragens (7') zur Materialstärke des Aufnahmebunds oder -kragens (7') ein Verhältnis im Bereich von 5 bis 9 aufweist,

10. Strömungssensor (1) nach einem der Ansprüche 5 bis 9, **dadurch gekennzeichnet, dass** der Durchmesser des Aufnahmebunds oder -kragens (7') zum Durchmesser des jeweiligen Biegebalkens (2', 3') ein Verhältnis im Bereich von 1,5 bis 3,5 hat,

11. Strömungssensor (1) nach einem der Ansprüche 5 bis 10, **dadurch gekennzeichnet, dass** die Länge des jeweiligen Biegebalkens (2', 3') zum Durchmesser des Biegebalkens (2', 3') ein Verhältnis im Bereich von 2 bis 6 aufweist.

12. Überwachungseinrichtung (100) zum Überwachen wenigstens eines Kondensatableiters (20) zum Ableiten eines Kondensats, umfassend:
- wenigstens einen Strömungssensor (1), nach einem der Ansprüche 5 bis 11, der lösbar mit einem Rohr und/oder Kondensatableiter (20) verbunden ist,
- wenigstens eine Auswerteeinrichtung (109),
wobei der Strömungssensor (1) benachbart zu dem Rohr und/oder dem Kondensatableiter (20) angeordnet ist.

13. Überwachungseinrichtung (100) nach Anspruch 12, **dadurch gekennzeichnet, dass** der Strömungssensor (1) zwischen dem Rohr und dem Kondensatableiter (20) vorzugsweise stromaufwärts vor dem Kondensatableiter angeordnet ist, und/oder vorzugsweise mittels eines ersten dem Rohr zugeordneten Flansches (31) und einem zweiten dem Kondensatableiter (20) zugeordneten Flansches (22) lösbar mit dem Rohr und dem Kondensatableiter (20) verbunden ist.

14. Überwachungseinrichtung (100) nach einem der Ansprüche 12 bis 13, **gekennzeichnet durch** eine elektronische Auswerteeinrichtung zur Auswertung der Signale des Schwingungswandlers und/oder zum Abgleich der eingehenden Signale des Schwingungswandlers (112) des Strömungssensors (1) mit einem in der elektronischen Auswerteeinrichtung hinterlegten Datensatz.

15. Überwachungseinrichtung (100) nach einem der Ansprüche 12 bis 14, **dadurch gekennzeichnet, dass** die Auswerteeinrichtung Bestandteil einer elektronischen Steuereinheit (122) ist, und/oder die Steuereinheit (122) signalleitend mit zumindest einer Energieerzeugungseinrichtung (124), vorzugsweise einem Thermogenerator, und einer Kommunikationseinheit (128) für eine Datenübertragung verbunden ist.

## Claims

1. A method of monitoring a condensate drain (20) including the steps:
a) providing a flow sensor (1) for detecting flow properties in a pipe and/or fitting carrying a medium, wherein the medium is in the form of a multi-phase flow,
b) detecting a vibration behaviour at a measurement location (8) provided on a vibration body (9) of the flow sensor (1) by means of a vibration converter (112), and
c) electronically evaluating the vibration behaviour of the vibration body (9),
wherein at the measurement location (8) vibrations of a first region (2) of the vibration body (9), which is provided at least partially in or adjacent to the flow of the medium, and a second region (3) of the vibration body (9), that is outside the flow, are recorded.

2. A method according to claim 1 **characterised in that** in-phase vibrations and out-of-phase vibrations of the two intercoupled regions of the vibration body are simultaneously recorded at the measurement location.

3. A method according to one of claims 1 and 2 **characterised in that** to evaluate the flow behaviour according to step c) reference measurements are carried out and/or data sets are produced thereby, which are used for comparison with the data measured at the measurement location (8).

4. A method according to one of the preceding claims **characterised in that** upon evaluation in accordance with step c) a relationship is produced between an operability, a pressure stage, a condensate amount as well as a vapour loss amount and a resonance frequency and an amplitude, preferably two resonance frequencies and their amplitudes, at the flow sensor (1).

5. A flow sensor (1) for detecting flow properties in a pipe and/or fitting carrying a medium, in particular a condensate drain (20), including
- a main body (5),
- an opening (4) which is arranged within the main body (5) and which is of a flow cross-section adapted for the medium to flow therethrough,
- a vibration body (9) which projects in adjacent relationship to the flow cross-section or into the flow cross-section, and
- a vibration converter (112) provided on the vibration body (9) for converting vibrations into electric signals,
**characterised in that** the vibration body (9) has a first region (2) provided at least partially in the flow cross-section of the medium which is in the form of a multi-phase flow and a second region (3) provided outside the flow cross-section, the first and second regions forming a coupled system and the vibration body being adapted to record at the measurement location (8) vibrations of the first region (2) and the second region (3) of the vibration body (9)

6. A flow sensor (1) according to claim 5 **characterised in that** the vibration body (9) is of a bar-shaped configuration and/or the main body (5) is annular.

7. A flow sensor (1) according to one of claims 5 and 6 **characterised in that** the vibration body (9) has a mounting shoulder or collar (7') which subdivides its two regions (2, 3) and which is fixedly disposed on the main body and is adapted to elastically couple the two regions (2, 3) of the vibration body (9) to each other and to the main body (5).

8. A flow sensor (1) according to one of claims 5 to 7 **characterised in that** the vibration body (9) has a cylindrical mounting shoulder or collar (7') on which a respective bending beam (2', 3') of a preferably circular cross-section is arranged on mutually opposite sides.

9. A flow sensor (1) according to one of claims 5 to 8 **characterised in that** the diameter of the mounting shoulder or collar (7') relative to the material thickness of the mounting shoulder or collar (7') is in a relationship in the region of 5 to 9.

10. A flow sensor (1) according to one of claims 5 to 9 **characterised in that** the diameter of the mounting shoulder or collar (7') relative to the diameter of the respective bending beam (2', 3') is in a relationship in the region of 1.5 to 3.5.

11. A flow sensor (1) according to one of claims 5 to 10 **characterised in that** the length of the respective bending beam (2', 3') relative to the diameter of the bending beam (2', 3') is in a relationship in the region of 2 to 6.

12. A monitoring device (100) for monitoring at least one condensate drain (20) for draining off a condensate, including:
- at least one flow sensor (1), according to one of claims 5 to 11, which is releasably connected to a pipe and/or condensate drain (20),
- at least one vibration converter (112), and
- at least one evaluation device (109),
wherein the flow sensor (1) is arranged adjacent to the pipe and/or the condensate drain (20).

13. A monitoring device (100) according to claim 12 **characterised in that** the flow sensor (1) is arranged between the pipe and the condensate drain (20), preferably upstream of the condensate drain, and/or preferably is releasably connected to the pipe and the condensate drain (20) by means of a first flange (31) associated with the pipe and a second flange (22) associated with the condensate drain (20).

14. A monitoring device (100) according to one of claims 12 and 13 **characterised by** an electronic evaluation device for evaluating the signals of the vibration converter and/or for comparison of the incoming signals of the vibration converter (112) of the flow sensor (1) with a data set stored in the electronic evaluation device.

15. A monitoring device (100) according to one of claims 12 to 14 **characterised in that** the evaluation device is a component part of an electronic control unit (122) and/or the control unit (122) is in signal-conducting communication with at least an energy generating device (124), preferably a thermogenerator, and a communication unit (128) for a data transfer.

## Revendications

1. Procédé servant à surveiller un purgeur de condensat (20), comprenant les étapes consistant à :
a) prévoir un capteur d'écoulement (1) servant à détecter des propriétés d'écoulement dans un tuyau et/ou une robinetterie acheminant un milieu, dans lequel le milieu est réalisé sous la forme d'un écoulement à plusieurs phases,
b) détecter un comportement d'oscillation au niveau d'un point de mesure (8) prévu au niveau d'un corps oscillant (9) du capteur d'écoulement (1) au moyen d'un convertisseur d'oscillation (112),
c) analyser de manière électronique le comportant oscillant du corps oscillant (9),
dans lequel des oscillations d'une première zone (2) du corps oscillant (9), qui est prévue au moins en partie dans un écoulement ou de manière adjacente à l'écoulement du milieu, et d'une deuxième zone (3), prévue à l'extérieur de l'écoulement, du corps oscillant (9) sont relevées au niveau du point de mesure (8).

2. Procédé selon la revendication 1, **caractérisé en ce que** des oscillations de mode commun et des oscillations symétriques des deux zones couplées l'une à l'autre du corps oscillant sont relevées de manière simultanée au niveau du point de mesure.

3. Procédé selon l'une quelconque des revendications 1 et 2, **caractérisé en ce que** des mesures de référence sont effectuées aux fins de l'analyse du comportement d'écoulement selon l'étape c), et/ou **en ce qu'**ainsi des jeux de données sont créés, qui sont utilisés aux fins de l'ajustement avec les données mesurées au niveau du point de mesure (8).

4. Procédé selon l'une quelconque des revendications précédentes, **caractérisé en ce qu'**un lien entre une capacité de fonctionnement, un étage de pression, une quantité de condensat ainsi qu'une quantité de fuite de vapeur et une fréquence de résonance et une amplitude, de préférence deux fréquences de résonance et leurs amplitudes, est établi au niveau du capteur d'écoulement (1) lors de l'analyse selon l'étape c).

5. Capteur d'écoulement (1) servant à détecter des propriétés d'écoulement dans un tuyau et/ou une robinetterie acheminant un fluide, en particulier dans un purgeur de condensat (20), comprenant :
- un corps de base (5),
- une ouverture (4) disposée à l'intérieur du corps de base (5), laquelle présente une section transversale d'écoulement préparée pour le passage du flux de milieu,
- un corps oscillant (9) adjacent à la section transversale d'écoulement ou dépassant dans la section transversale d'écoulement, et
- un convertisseur d'oscillation (112) prévu au niveau du corps oscillant (9), servant à convertir des oscillations en des signaux électriques,
**caractérisé en ce que** le corps oscillant (9) présente une première zone (2) prévue au moins en partie dans la section transversale d'écoulement du milieu réalisé sous la forme d'un écoulement à plusieurs phases et une deuxième zone (3) prévue à l'extérieur de la section transversale d'écoulement, dans lequel la première et la deuxième zone forment un système couplé et le corps oscillant (9) est mis au point pour relever, au niveau du point de mesure (8) des oscillations de la première zone (2) et de la deuxième zone (3) du corps oscillant (9).

6. Capteur d'écoulement (1) selon la revendication 5, **caractérisé en ce que** le corps oscillant (9) est réalisé de manière à présenter une forme de barre, et/ou **en ce que** le corps de base (5) est de forme annulaire.

7. Capteur d'écoulement (1) selon l'une quelconque des revendications 5 ou 6, **caractérisé en ce que** le corps oscillant (9) présente un épaulement ou un collet de réception (7') divisant ses deux zones (2, 3), qui est reçu de manière fixe au niveau du corps de base (5) et est mis au point afin de coupler de manière élastique les deux zones (2, 3) du corps oscillant (9) l'une à l'autre et au corps de base (5).

8. Capteur d'écoulement (1) selon l'une quelconque des revendications 5 à 7, **caractérisé en ce que** le corps oscillant (9) présente un épaulement ou un collet de logement (7'), au niveau duquel respectivement une barre pliante (2', 3') présentant une section transversale de préférence de forme circulaire est disposée sur des côtés se faisant face.

9. Capteur d'écoulement (1) selon l'une quelconque des revendications 5 à 8, **caractérisé en ce que** le diamètre de l'épaulement ou du collet de réception (7') présente, par rapport à l'épaisseur de matériau de l'épaulement ou du collet de réception (7'), un rapport dans la plage allant de 5 à 9.

10. Capteur d'écoulement (1) selon l'une quelconque des revendications 5 à 9, **caractérisé en ce que** le diamètre de l'épaulement ou du collet de réception (7') par rapport au diamètre de la barre pliante (2', 3') respective a un rapport dans la plage allant de 1,5 à 3,5.

11. Capteur d'écoulement (1) selon l'une quelconque des revendications 5 à 10, **caractérisé en ce que** la longueur de la barre pliante (2', 3') respective par rapport au diamètre de la barre pliante (2', 3') a un rapport dans la plage allant de 2 à 6.

12. Système de surveillance (100) servant à surveiller au moins un purgeur de condensat (20) servant à purger un condensat, comprenant :
- au moins un capteur d'écoulement (1) selon l'une quelconque des revendications 5 à 11, lequel est relié de manière amovible à un tuyau et/ou à un purgeur de condensat (20),
- au moins un système d'analyse (109),
dans lequel le capteur d'écoulement (1) est disposé de manière adjacente par rapport au tuyau et/ou au purgeur de condensat (20).

13. Système de surveillance (100) selon la revendication 12, **caractérisé en ce que** le capteur d'écoulement (1) est disposé entre le tuyau et le purgeur de condensat (20) de préférence en amont devant le purgeur de condensat, et/ou est relié de manière amovible au tuyau et au purgeur de condensat (20) de préférence au moyen d'une première bride (31) associée au tuyau et d'une deuxième bride (22) associée au purgeur de condensat (20).

14. Système de surveillance (100) selon l'une quelconque des revendications 12 à 13, **caractérisé par** un système d'analyse électronique servant à analyser les signaux du convertisseur d'oscillation et/ou servant à ajuster les signaux entrants du convertisseur d'oscillation (112) du capteur d'écoulement (1) à un jeu de données enregistré dans le système d'analyse électronique.

15. Système de surveillance (100) selon l'une quelconque des revendications 12 à 14, **caractérisé en ce que** le système d'analyse fait partie intégrante d'une unité de commande (122) électronique, et/ou **en ce que** l'unité de commande (122) est reliée avec conduction de signaux à au moins un système de génération d'énergie (124), de préférence un thermo générateur, et à une unité de communication (128) en vue d'une transmission de données.
